# EUROPEAN PATENT APPLICATION

(11) **EP 1 553 530 A1**
(43) Date of publication of application: **13.07.2005**
(21) Application number: 04029717.8
(22) Date of filing: 15.12.2004
(51) Int. Cl.: G07F 7/10

(54) **A secure device and information processing apparatus**

(30) Priority: 15.12.2003 JP 2003416381; 15.12.2003 JP 2003416650
(71) Applicant: MATSUSHITA ELECTRIC INDUSTRIAL CO., LTD., Kadoma-shi, Osaka 571-8501 (JP)
(72) Inventor: Minemura, Atsushi, Tokyo 173-0031 (JP); Koizumi, Masahiko, Tokyo 145-0062 (JP)
(74) Representative: Grünecker, Kinkeldey, Stockmair & Schwanhäusser Anwaltssozietät

(57) **Abstract**

The inventive IC card includes a first communications unit, a second communications unit, and a passing information management unit accessible to a card application. The passing information management unit retains the processing identifier transmitted from an external R/W via the first communications unit and the PIN transmitted from a cell phone via the second communications unit in association with each other. The card application, receiving a processing identifier and a data request from the external R/W reads the PIN whose corresponding processing identifier matches the received processing identifier from the passing information management unit and transmits the PIN to the external R/W. Thus, even in case a cell phone is in the hands of another malicious person with a PIN written into an IC card, the PIN cannot be read from the IC card unless the processing identifier transmitted from the external R/W matches the processing identifier corresponding to the PIN.

## Description

### BACKGROUND OF THE INVENTION

### 1. Field of the Invention

The present invention relates to a secure device such as an IC card and information processing apparatus which mounts the secure device such as a cell phone, the information processing apparatus preventing an accident where data such as PIN written into the secure device is abused. The invention also relates to a secure device such as an IC card and information processing apparatus which mounts the secure device such as a cell phone, and terminal apparatus such as a POS terminal which communicates with the secure device to perform services, the terminal apparatus facilitating input of personal identification information required when a card function is executed.

### 2. Description of the related art

In recent years, IC cards have been widely used for electronic settlement cards, commuter passes, and prepaid railway tickets with charging function. Lately, with the enhancement of the microfabrication technology, IC cards with a relatively large capacity are available on the market. Such IC cards, with a plurality of card applications to execute card services stored therein, can be used as multi-application cards supporting a plurality of applications.

Communications systems for IC cards include a contact communications system where a touch of a reader/writer on the electric contact of an IC card allows reading/writing of recorded information and a con-contact communications system where wireless communications are used to exchange information rather than a physical contact with the reader/writer.

International Standards for IC cards include ISO7816 and ISO14443. These international standards describe that data exchange made between a card application on an IC card and a terminal application on a reader/writer is based on a "command" transmitted from the terminal application to the card application and a "response" transmitted from the card application to the terminal application. APDU (Application Protocol Data Unit) to specify the format of a command or a response has been specified by the standards. Thus, the IC card can operate only in a passive fashion.

Recently, it is a common practice to mount a chip-shaped IC card capable of both contact communications and contactless communications into a cell phone and use the cell phone in place of an electronic wallet or a commuter pass. For example, in case the information on a prepaid railway ticket is recorded onto an IC card, when the user operates some keys on his/her cell phone to instruct display of remaining amount, the instruction is entered to the IC card from the cell phone over contact communications, and the remaining amount information on the IC card is read and displayed on the screen of the cell phone. When the cell phone is placed against an automatic ticket gate in a station, an instruction of reading or overwriting the information data is entered to the IC card on the cell phone over contactless communications, and the remaining amount data recorded on the IC card is updated in accordance with this instruction.

Japanese Patent Laid-Open No. 2003-60748 describes apparatus which uses the display unit on the cell phone to display successful completion of card functions when contactless communications by way of the IC card mounted on the cell phone is successfully made. The IC card starts a card application specified by an external reader/writer among the plurality of card applications, performs card-based communications (contactless communications) with the external reader/writer in accordance with the service used. On successful completion of the card-based communications, the IC card transmits a notification signal to indicate the end of communications and the application ID to the controller of the cell phone. The controller, receiving the information, outputs predetermined control information in accordance with the application ID from the display unit of the cell phone.

A cell phone on which an IC card is mounted includes a keypad, a display, a communications function, and an application execution function. By using such cell phone functions in coordination with the card processing by way of contactless communications by the IC card, it is possible to implement a service with enhanced convenience, operability and functionality. The apparatus described in Japanese Patent Laid-Open No. 2003-60748 aims at providing display in coordination with the contactless communications processing of the IC card by using the display unit of the cell phone.

An IC card conforming to corresponding international standards is capable of a passive operation of returning a response to a command received over contactless communications from an external reader/writer. Such an IC card itself cannot transmit a notification signal or an application ID to the controller of a cell phone, unlike an IC card described in Japanese Patent Laid-Open No. 2003-60748.

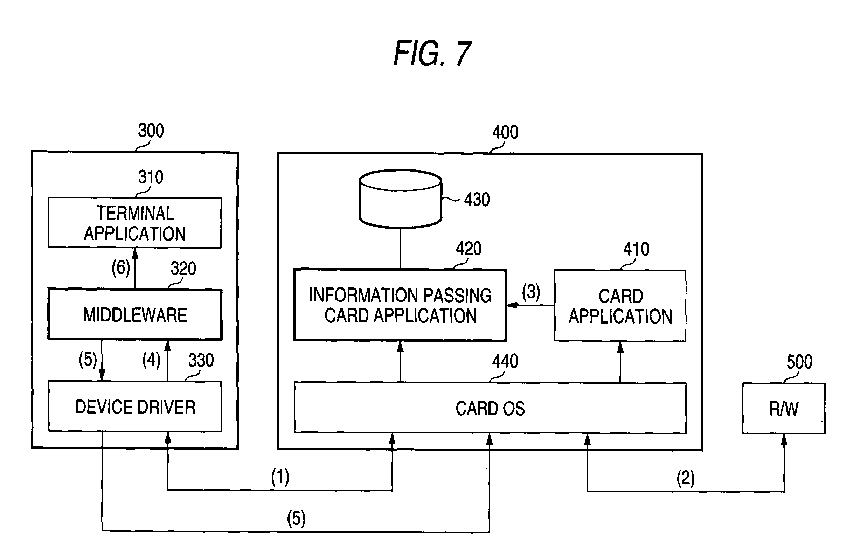

The inventors have newly developed an IC card capable of efficiently transmitting the information on card processing made based on an instruction from an external reader/writer in accordance with international standards. Fig. 7 shows the configuration of the IC card 400 and a cell phone 300 mounting the IC card 400, where the order of processing performed in coordination by the cell phone 300, the IC card 400 and an external reader/writer 500 is indicated by encircled numbers.

The IC card 400 comprises a plurality of card applications 410 for executing various services created by a service provider, an information passing card application 420 for centrally passing/receiving information to/from the cell phone 300, an information storage section 430 for temporarily storing the information to be passed, and a card OS 440 for executing communications and file management. The cell phone 300 includes a terminal application 310 for executing the operation coordinated with the processing of the card application 410, middleware 320 for performing information passing to the terminal application 310, and a device driver 330 for controlling the operation of the cell phone 300.

All card applications 410 on the IC card 400 can access information passing card application 420 to write the information transmitted to the card application 410 from the external reader/writer 500 into the information storage section 430 of the information passing card application 420.

The middleware 320 of the cell phone 300 can access the information passing card application 420 without limitation once it has made mutual authentication with the information passing card application 420.

The middleware 320 of the cell phone 300 supervises the state of the IC card 400 by way of palling via the device driver 330 (1). When the user places the cell phone 300 against the external reader/writer 30, the IC card 400 in the contactless communications coverage of the external reader/writer 500 is activated and the card application 410 specified by the external reader/writer 500 executes processing instructed by the external reader/writer 500 (32). The card application 410 writes the information which now needs to be transmitted into the cell phone 300 in accordance with this processing into the information passing card application 420 (3).

The information includes the name of a terminal application (including middleware), information to be passed to the terminal application, and the ID of a requested card application.

The device driver 330 of the cell phone 300, detecting the end of contactless communications of the IC card 400, informs the middleware 320 of the event (4). The middleware 320 performs mutual authentication with the information passing card application 420 and accesses the information passing card application 420, then acquires the information retained therein (5). The middleware 320 activates the specified terminal application 310 based on the information acquired from the information passing card application 420. The terminal application 310 performs the specified processing. When the middleware 320 is specified, the middleware 320 itself performs the processing (6).

For example, in case input of a personal identification number (PIN) required for credit settlement processing is requested by the external reader/writer 500 of the settlement terminal, the middleware 320 which has interpreted the acquired information displays a PIN input window on the display of the cell phone 300. When the user enters a PIN, the middleware 320 writes the PIN into the information passing card application 420.

The PIN information is read by the card application 410 which is activated when the user places the cell phone 300 against the external reader/writer 500 again and is transmitted to the external reader/writer 500 in accordance with the instruction of the external reader/writer 500. Matching of PIN is made in a center connected to the external reader/writer 30. In case the matching is successful, the settlement processing is executed.

On the apparatus, in case the cell phone 300 is stolen or lost and is in the hands of another person in a state where the PIN is written into the information storage section 430 of the information passing card application 420 (that is, the state before completion of settlement processing), the PIN may be abused to settle a commodity purchased without the permission of the owner of the cell phone.

Mounting an IC card conforming to an international standard on a cell phone and causing the cell phone to perform operation coordinated with the card processing via contactless communications on the IC card requires a new philosophy and has many problems to solve.

For example, in case an IC-card-mounted cell phone is placed against the external reader/writer of a settlement terminal to perform settlement processing, an attempt to enter a personal identification number (PIN) required for the settlement involves problems such as: when to enter the PIN without interrupting the contactless communications of the IC card, how to transmit a PIN input request from the IC card to the cell phone, and how to transmit the PIN entered from the cell phone to the settlement terminal via the IC card.

In case the IC card mounted on the cell phone is a multi-application card supporting a plurality of services, the PIN to be entered must support the settlement service to be activated (application to be activated). This presents a problem of how the user should enter a PIN supporting the card application.

When the user places the cell phone on which a multi-application card is mounted against an external reader/writer, the external reader/writer of a unit which executes a single service specifies the card application to the IC card, followed by card communications between the card application and the external reader/writer. In case the user enters a PIN supporting a card application, the user must select a relevant card application from among the numerous card applications retained in the IC card before entering the PIN. This is extremely cumbersome to the user.

In this case, the workload of selecting a card application is reduced when a list of card applications retained in the IC card (list of card application IDs) is displayed, although an IC card generally does not provide a list of card applications retained therein from the viewpoint of security.

In case a multi-application card has a credit card function of Company A and Company B and the external reader/writer supports both services, the user wishing to use the card function from Company A selects the relevant card application and enters a PIN, which also requires much workload of selecting the card function.

### SUMMARY OF THE INVENTION

The invention solves the problems and has as an object to provide a secure device and information processing apparatus capable of preventing abuse of data such as a PIN written into the secure device.

The invention solves the problems and has as an object to provide a secure device, information processing apparatus and terminal apparatus capable of simplifying the input of a PIN required of the user to execute a card service thereby enhancing the convenience of card functions.

The invention thus provides a secure device comprising first communications unit, second communications unit and one or more card function unit (card applications), characterized in that the secure device includes passing information management unit accessible to all card function unit, that the passing information management unit retains the processing identifier transmitted from an external reader/writer via the first communications unit and the data transmitted from the information processing apparatus via the second communications unit in association with each other, that the card function unit, receiving a processing identifier and a data request from an external reader/writer via the first communications unit, reads the data where the corresponding processing identifier matches the received processing identifier from the passing information management unit and transmits the data to the external reader/writer.

Thus, even in case the information processing apparatus is in the hands of another malicious person with data including a PIN written into a secure device, the data cannot be read from the secure device unless the processing identifier transmitted from the processing terminal matches the processing identifier corresponding to the data. This prevents illegal processing using the data.

The secure device is characterized in that the passing information management unit selects data corresponding to the processing identifier matching the processing identifier received by the card function unit from the retained data and that the card unit acquires the selected data.

The passing information management unit selects the corresponding data of its own accord from the retained data.

According to the invention, the processing identifier transmitted from the external reader/writer is updated in terms of time.

Thus, when a predetermined time has elapsed, the processing identifier transmitted from the processing terminal is different from the processing identifier corresponding to the data then the data is no longer read from the secure device.

The secure device is characterized in that, when the card function unit has failed to transmit data to an external reader/writer without acquiring data from the passing information management unit, the same processing identifier as the previous pp information s retransmitted from the external reader/writer to the card function unit in the next round of communications by the first communications unit carried out within a predetermined time.

Thus, in a procedure where information processing apparatus is placed against an external reader/writer for settlement processing, even in case data including PIN is not retained in the passing information management unit when the information processing apparatus is first placed and settlement processing has failed, the user may write the PIN into the passing information management unit from the information processing apparatus and place the information processing apparatus within a predetermined time. The external reader/writer retains the processing identifier which has failed in settlement processing for a predetermined time for reuse in the next card processing and reads the data corresponding to the processing identifier from the passing information management unit, thus succeeding in the settlement processing.

The invention provides a secure device comprising first communications unit, second communications unit and one or more card function unit, characterized in that the secure device includes passing information management unit accessible to all card function unit, that the card function unit, receiving a data request from an external reader/writer via the first communications unit, reads the data transmitted from information processing apparatus which is retained in the passing information management unit and transmits the data to the external reader/writer, and that, when the data is not read within a predetermined time, the passing information management unit erases the data based on an instruction transmitted from the information processing apparatus via the second communications unit.

Thus, even in case the information processing apparatus is in the hands of another malicious person with the data including PIN written into a secure device, the data is erased when a predetermined time, e.g. 30 seconds, has elapsed. This prevents illegal processing using the data.

The secure device according to the invention is characterized in that the first communications unit performs contactless communications and that the second communications unit performs contact communications.

The invention provides information processing apparatus holding the secure device, characterized in that the information processing apparatus comprises state supervision unit for supervising the end of communications by way of the first communications unit of the secure device and middleware which, once the state supervision unit has detected the end of the communications, accesses the passing information management unit of the secure device via the second communications unit of the secure device and acquires a processing identifier and a data request retained in the passing information management unit and that the middleware transmits the data entered in response to the data request and the processing identifier to the passing information management unit.

Thus, the secure device can manage the data including PIN entered by the user and a pp information n association with each other. In case the processing identifier transmitted from a processing terminal does not match the processing identifier corresponding to the data, data reading from the secure device can be stopped.

The invention provides information processing apparatus holding the secure device, characterized in that the information processing apparatus comprises state supervision unit for supervising the end of communications by way of the first communications unit of the secure device and middleware for writing the entered data to the passing information management unit of the secure device via the second communications unit of the secure device and that, when communications processing by way of the first communications unit of the secure device is not performed within a predetermined time, the middleware erases the data written into the passing information management unit.

The information processing apparatus supervises the state of the secure device for a predetermined time. In case processing on the secure device and the external reader/writer is not performed in the meantime, the information processing apparatus erases the data written into the secure device. The secure device is attached to the information processing apparatus in a detachable fashion or integrally embedded into the information processing apparatus.

The secure device and information processing apparatus according to the invention prevents data reading from the secure device and prevents abuse of data even in case the information processing apparatus is stolen or lost and is in the hands of another person with data including PIN written into the secure device.

The invention provides a secure device comprising first communications unit, second communications unit and one or more card function unit (card applications), characterized in that the secure device includes passing information intervening unit accessible to all card function unit, that the card function unit, receiving a request for personal identification information required to provide a service from an external reader/writer via the first communications unit, reads the personal identification information retained in the passing information intervening unit and transmits the information to the external reader/writer, and that the passing information intervening unit retains the personal identification information written from the information processing apparatus via the second communications unit before the card function beans communicates with the external reader/writer via the first communications unit.

To the passing information intervening unit of the secure device is first written the personal identification information entered by the user from the information processing apparatus (personal identification information prior input system). The card function unit activated by the external reader/writer reads the personal identification information from the passing information intervening unit and transmits the information to the external readerlwriter. The external reader/writer sequentially updates the card function unit (or the card service) to be activated until matching of personal identification information succeeds. The user thus has only to enter the personal identification information on the desired service to enjoy the desired service without workload of selecting a card application.

The invention provides a secure device comprising first communications unit, second communications unit and one or more card function unit, characterized in that the secure device includes passing information intervening unit accessible to all card function unit, that the card function unit, receiving specific information on a service and a request for personal identification information required to provide the service from an external reader/writer via the first communications unit, reads the personal identification information and transmits the information to the external reader/writer in case the personal identification information is retained in the passing information intervening unit, or writes the specific information on the service into the passing information intervening unit in case the personal identification information is not retained in the passing information intervening unit, and that the passing information intervening unit provides the information processing apparatus of the specific information on the service via the second communications unit and retains the personal identification information written from the information processing apparatus.

To the passing information intervening unit of the secure device is written specific information on the services received from an external reader/writer and the information is read into the information processing apparatus, which displays service list information. The user checks the list information and enters the personal identification information on a desired service (list information display system).

The secure device according to the invention is characterized in that the first communications unit performs contactless communications and that the second communications unit performs contact communications.

The invention provides information processing apparatus holding the secure device of the personal identification information prior input system, characterized in that the information processing apparatus comprises state supervision unit for supervising the end of communications by way of the first communications unit of the secure device and middleware for displaying a screen for entering personal identification information and writing the entered personal identification information to the passing information intervening unit of the secure device via the second communication unit of the secure device.

The personal identification information entered by the user from the information processing apparatus is first written into the passing Information intervening unit of the secure device by way of the middleware.

The invention provides information processing apparatus holding the secure device of the list information display system, characterized in that the information processing apparatus comprises state supervision unit for supervising the end of communications by way of the first communications unit of the secure device and middleware which, once the state supervision unit has detected the end of the communications, accesses the passing information intervening unit of the secure device via the second communications unit of the secure device and acquires specific information on a service retained in the passing information intervening unit, and that the middleware displays list information on a service based on the acquired information as well as displays a screen for entering personal identification information required to provide the service and writes the entered personal identification information into the passing information intervening unit.

Thus, the user has only to enter personal identification information on a desired service from service list information to enjoy the desired service, even when the user does not have knowledge of services handled by an external reader/writer. The user need not select a card application.

The information processing apparatus according to claim 15 displays service list information based on the acquired information and prompts input of service specification information and personal identification information required to provide the service, and writes the entered service specification information and personal identification information into the passing information intervening unit.

On this apparatus, the user has to additionally specify a service because the user enters a service and personal identification information required to provide the service. In case the same PIN is set to more than one service, it is possible to select and execute a service from among the available services.

The secure device is attached to the information processing apparatus in a detachable fashion or integrally embedded into the information processing apparatus.

The invention provides terminal apparatus for communicating with a secure device equipped with a plurality of card function unit and executing a service selected from among a plurality of available services, characterized in that the terminal apparatus activates card function unit corresponding to a selected service and requests personal identification information required to provide a service, and in case the personal identification information transmitted from the card function unit is abnormal, selects another service, and activates the card function unit corresponding to the service and requests personal identification information required to provide the service.

The terminal apparatus automatically selects and executes a service from among a plurality of executable services in support of the personal identification prior input system.

The secure device, information processing apparatus and terminal apparatus according to the invention simplifies input of personal identification information by the user required when a card service is executed. This speeds up the execution of a card service.

The secure device according to the invention performs only passive operations of receiving a command and returning a response and conforms to corresponding international standards. The secure device thus has a general versatility.

### BRIEF DESCRIPTION OF THE DRAWINGS

Fig. 1 is a block diagram showing the configuration of a cell phone and an IC card according to the first embodiment of the invention;
Fig. 2 shows the PIN information management form of the IC card according to the first embodiment of the invention;
Fig. 3 is a sequence chart showing the operation of the cell phone, the IC card and an external reader/writer according to the first embodiment of the invention;
Fig. 4 is a sequence chart showing the continued operation of the cell phone, the IC card and the external reader/writer according to the first embodiment of the invention;
Fig. 5 is a block diagram showing the configuration of a cell phone and an IC card according to the second embodiment of the invention;
Fig. 6 is a sequence chart showing the operation of the cell phone, the IC card and an external reader/writer according to the second embodiment of the invention;
Fig. 7 is a block diagram showing the configuration of a cell phone and an IC card performing operation which conforms to international standards.
Fig. 8 is a block diagram showing the configuration of a cell phone and an IC card according to the third embodiment of the invention;
Fig. 9 illustrates the relationship between a terminal application, a card application and a settlement terminal application according to the third embodiment of the invention;
Fig. 10 is a sequence chart showing the operation of the cell phone, the IC card and an external reader/writer according to the third embodiment of the invention;
Fig. 11 is a sequence chart showing the operation of a cell phone, an IC card and an external reader/writer according to the fourth embodiment of the invention; and
Fig. 12 is a sequence chart showing the operation of the cell phone, the IC card and the external reader/writer according to the fourth embodiment of the invention (continued from Fig. 11).

### BRIEF DESCRIPTION OF THE PREFERRED EMBODIMENTS

### (First embodiment)

The secure device according to the first embodiment of the invention is an IC card equipped with both functions of contactless and contact communications and the information processing apparatus is a cell phone which is presented against a credit settlement terminal. The following is a case where a PIN is written into the IC card from a cell phone. The cell phone, the IC card and an external reader/writer of a settlement terminal work in coordination to protect the PIN from abuse.

The IC card attached to a cell phone communicates information to/from the cell phone over contact communications. When the user places a cell phone against an external reader/writer and the IC card enters the contactless communications coverage of the external reader/writer, the IC card communicates information to/from the external reader/writer over contactless communications.

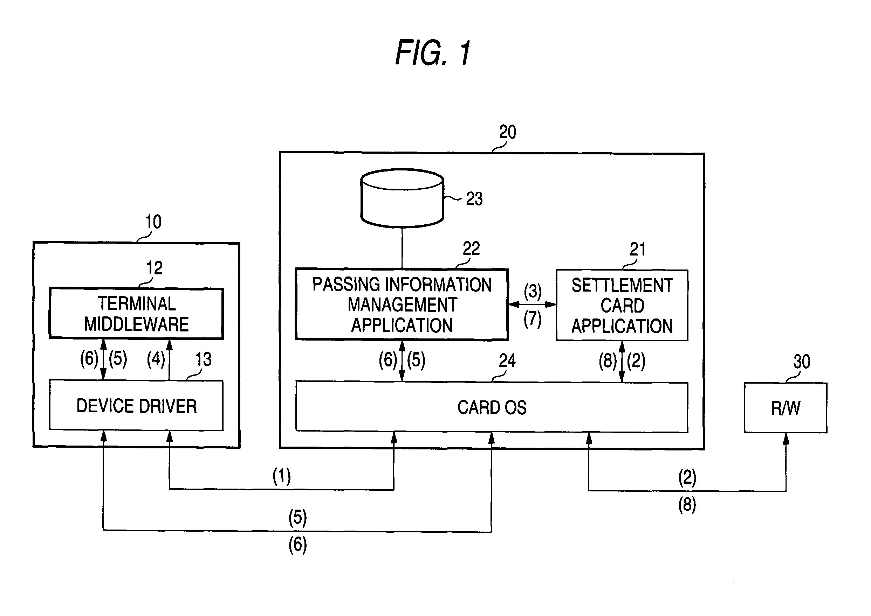

As shown in Fig. 1, an IC card 20 comprises a passing information management application 22 for centrally receiving/passing information from/to a plurality of settlement card applications 21 and a cell phone 10 and managing the PIN information passed from the cell phone 10 in association with identification information, an information storage section 23 for retaining the information to be passed, and a card OS for executing communications and file management.. The cell phone 10 comprises terminal middleware 12 for acquiring information from the passing information management application 22 and transmitting the PIN information entered by the user to the passing information management application 22, and a device diver 13 for controlling the operation of the cell phone 10.

All settlement card applications of the IC card 20 can access the passing information management application 22 and write the information transmitted from an external reader/writer 39 to a settlement card application 21 and the information to be transmitted to the cell phone 10 to the information storage section 23 via the passing information management application 22.

The passing information management application 22, for example in the case of a Java™ card where a card application is created in the Java™ language, can be implemented using the Sharable Interface. While a firewall is used to separate card applications so that a plurality of card applications can coexist in a safe fashion in an IC card, the Sharable Interface is an interface which can access a card application without being obstructed by a firewall.

The terminal middleware 12 of the cell phone 10, once it has performed mutual authentication with the passing information management application 22, can access the passing information management application 22 without limitation.

In Fig. 1, the order of processing performed in coordination by the cell phone 10, the IC card 20 and the external reader/writer 30 is indicated by encircled numbers.

The terminal middleware 12 of the cell phone 10 supervises the state of contactless communications of the IC card 20 via the device driver 13 and keeps transmitting a polling signal to the IC card 20 for this purpose (1). The IC card 20 transmits a response "under communications" to the polling signal for processing state supervision in case contactless communications are in progress, or a response "not under communications" in case contactless communications are not in progress. This allows the device driver 30 to detect the end of contactless communications of the IC card 20.

When the user places the cell phone 10 against the external reader/writer 30, the IC card which has entered the contactless communications rage of the external reader/writer start contactless communications and the settlement card application 21 specified by the external reader/writer 30 is activated (2). The external reader/writer 30 requests the activated settlement card application 21 to transmit a personal identification number (PIN) required for credit settlement processing.

In this practice, the external reader/writer 30 transmits the PIN request and a unique processing identifier to the settlement card application 21.

The external reader/writer 30 updates the processing identifier every predetermined time (e.g., 30 seconds). Or, the external reader/writer 30 may use e.g., "store name+store number+check-out counter number+date+time" as the processing identifier and may retain the processing identifier for a predetermined time and reuse the processing identifier for next card processing in case an NG is returned in response to the PIN request from the settlement card 21.

The settlement card application 21 which has received a PIN request accesses the passing information management application 22 and reads the PIN information retained in the information storage section 23.

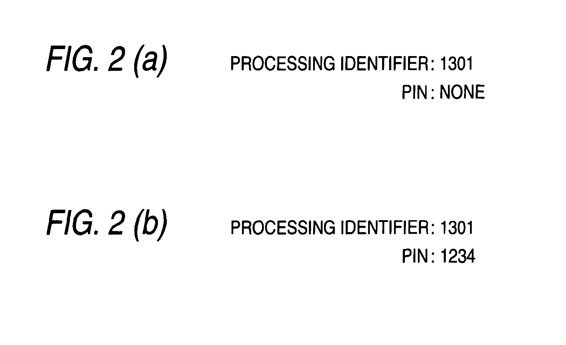

The information storage section 23 retains the processing identifier transmitted from the external reader/writer 30 upon the PIN request and PIN information written from the cell phone 10 based on the PIN request, in association with each other, as shown in Fig. 2. In a stage where PIN input is not made in response to the PIN request, only the pp information s entered as shown in Fig. 2(a).

The settlement card application, receiving a PIN request, reads the PIN information corresponding to the processing identifier received from the external reader/writer 30 upon the PIN request. In case the corresponding PIN information is not recorded in the information storage section 23, the settlement card application requests the cell phone 22 to overwrite the information in the information storage section 23 with the processing identifier and PIN request just received from the external reader/writer 30 into the information storage section 23 (3) and responds to the external reader/writer 30 that the PIN request cannot be answered. In this case, the contactless communications between the settlement card application and the external reader/writer 30 ends while the settlement processing is unsuccessful.

The device driver 13 of the cell phone 10 engaged in state supervision of the IC card 20 detects the end of contactless communications of the IC card 20, informs the terminal middleware of the event (4). The terminal middleware 12 interprets the acquired information and displays a PIN input window on the display of the cell phone 10. When the user operates keys on the cell phone 10 to enter a PIN, the terminal middleware 12 transmits the entered PIN and processing identifier to the passing information management application 22 (6). The passing information management application 22 writes the PIN into the information storage section 23 in association with the processing identifier.

When the user places the cell phone 10 against the external reader/writer 30 again, the external reader/writer 30 activates the settlement card application and transmits a PIN request and a processing identifier to the settlement card application. The settlement card application accesses the passing information management application 22 and reads the PIN information corresponding to the processing identifier from the information storage section 23. Unless 30 seconds have not elapsed before the current PIN request since the last PIN request from the external reader/writer 30, the processing identifier has not been changed. The settlement card application can read the PIN information corresponding to the processing identifier from the information storage section 23 (7).

In case the settlement card application has successful read the PIN information corresponding to the pp information t transmits the PIN information to the external reader/writer 30 (8) and erases the PIN information in the information storage section 23. In case the settlement card application has failed to acquire the PIN information corresponding to the pp information t overwrites the pp information n the information storage section 23 and discards the PIN, then writes the PIN request into the information storage section 23.

Matching of the PIN is made in a center connected to the external reader/writer 30. In case the matching is successful, the settlement processing is executed and the settlement processing 2 terminates successfully.

In this way, the IC card 20 manages the processing identifier to be updates in terms of time and the Pin entered by the user in association with each other. The PIN information is extracted from the IC card 20 only when the processing identifier newly entered from the settlement terminal matches the processing identifier corresponding to the PIN.

Thus, even in case the cell phone is in the hands of another malicious person with a PIN written into an IC card mounted thereon, the settlement attempt will fail unless settlement is executed before the pp information s updated using a settlement terminal on which the authorized owner was going to make settlement. This substantially prevents an illegal settlement.

Update of a processing identifier on a settlement terminal may be made by discarding the current processing identifier retained in an unattended POS every predetermined time to renew the pp information n the case of an attended POS, the processing identifier retained in the POS may be discarded in accordance with the instruction of the cashier to renew the processing identifier.

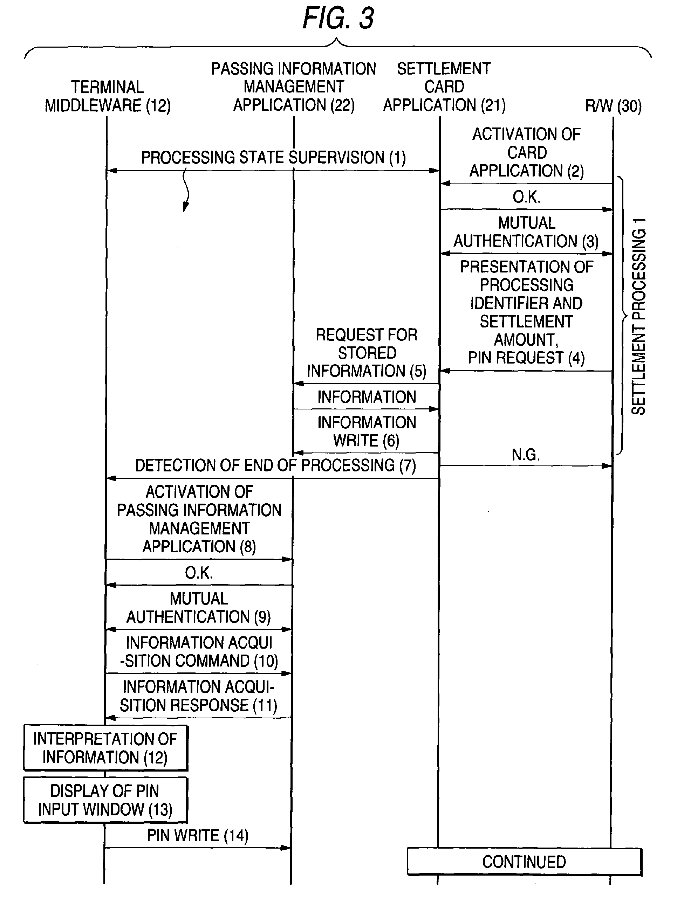

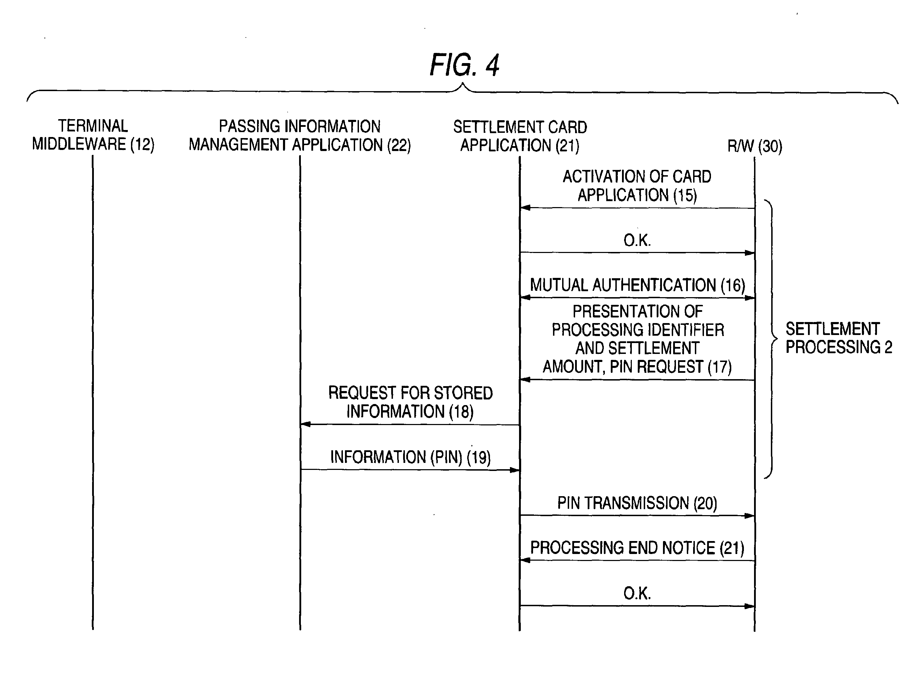

Figs. 3 and 4 show the processing flow of a cell phone 10, an IC card 20 and an external reader/writer 30. The settlement card application of the cell phone 10 supervises the contactless communications of the IC card 20 (1). When the cell phone 10 is placed against the external reader/writer 30, the external reader/writer 30 specifies the settlement card application and instructs its activation (2). Receiving an activation OK response from the settlement card application, the external reader/writer 30 performs mutual authentication with the settlement card application (3) and transmits to the settlement card application settlement amount information, a processing identifier and a PIN request to be presented to the cell phone 10 (4).

The settlement card application requests from the passing information management application 22 the information retained in the information storage section 23 (5) and searches the acquired information for PIN information matching the processing identifier. Having failed to acquire the PIN information, the settlement card application accesses the passing information management application 22 to write the settlement amount information and the PIN request (6).

An NG is responded to the external reader/writer 30 and the settlement processing 1 terminates unsuccessfully.

The terminal middleware 12 of the cell phone 10, detecting the end of processing of the IC card 20 (7), instructs activation of the passing information management application 22 (8). Receiving an activation OK response from the passing information management application 22, the terminal middleware 12 performs mutual authentication with the passing information management application 22 (9) and transmits an information acquisition command to the passing information management application 22 (10). Receiving the command, the passing information management application 22 returns to the terminal middleware 12 a response whose response data includes the settlement amount information, processing identifier and PIN request (11). The terminal middleware 12 interprets the acquired information (12) and displays the settlement amount and a PIN input window on the display of the cell phone 10 (13). When the user operates keys on the cell phone 10 to enter a PIN, the terminal middleware 12 accesses the passing information management application 22 and writes the PIN (14).

When the user places the cell phone 10 against the external reader/writer 30 again, the external reader/writer 30 activates the settlement card application 21 (15), performs mutual authentication (16), and transmits settlement amount information, a processing identifier and a PIN request to the settlement card application (17).

The settlement card application requests from the passing information management application 22 the information retained in the information storage section 23 (18), and acquiring the information (19), searches the acquired information for PIN information matching the processing identifier, then transmits the acquired PIN information to the external reader/writer 30 (20).

The passing information management application 22 may act as an entity to search for a PIN, In this case, the passing information management application 22 receives a processing identifier from the settlement card application, and in case corresponding PIN information is found in the data retained in the information storage section 23, outputs the PIN information to the settlement card application.

Matching of the PIN is made in a center connected to the external reader/writer 30. In case the matching is successful, the settlement processing is executed and a processing end notice is transmitted from the external reader/writer 30 to the settlement card application (21). The settlement processing 2 terminates successfully.

The IC card 20 performs only passive operations of receiving a command and returning a response and conforms to corresponding international standards. In case an illegal settlement is attempted even when a PIN is written, the PIN is not output from the IC card, which prevents illegal settlement.

### (Second embodiment)

The second embodiment of the invention describes a case where an IC-card-mounted cell phone is operated to write a PIN to the IC card first and the cell phone is placed against an external reader/writer for settlement processing. The cell phone supervises the state of the IC card. In case processing of the IC card and the external reader/writer is not made even when a predetermined time has elapsed, the PIN written into the IC card is erased to prevent possible abuse of the PIN by another person.

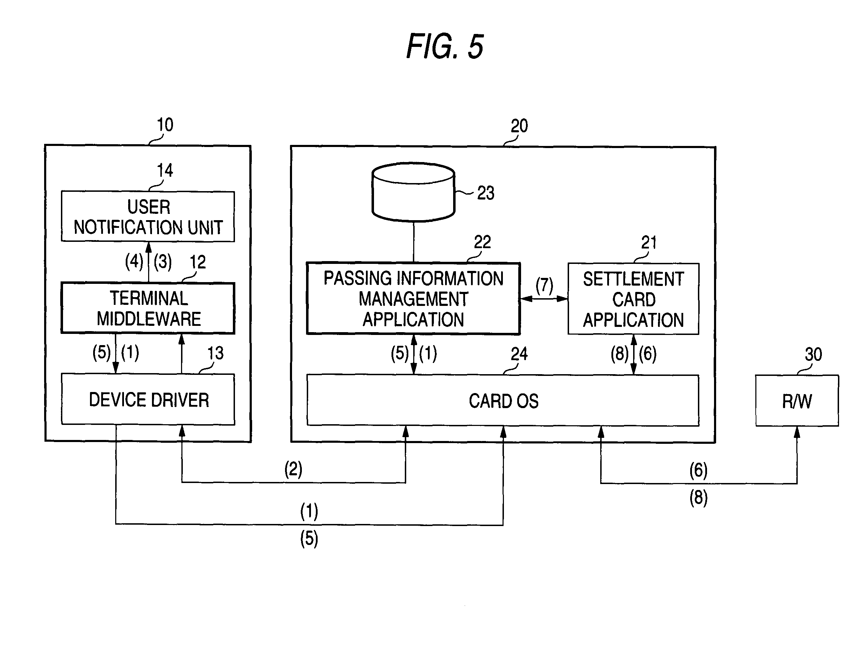

As shown in Fig. 5, the cell phone 10 comprises terminal middleware 12 which writes the PIN entered by the user to the passing information management application 22 of the IC card 20 and which, once a predetermined time has elapsed, erases the PIN, and user notification unit 14 which displays whether the age of the entered PIN has elapsed. The other configuration of the cell phone 100 and IC card 20 is the same as that in the first embodiment (Fig. 1).

The terminal middleware 12 of the cell phone 10 presents a PIN input window on the display of the cell phone 10. The user expects a settlement card application to be used for a settlement service and enters a personal identification number (PIN) used by the settlement service. The terminal middleware 12 acquires the current time and sets the current time to the start time of the PIN age. The terminal middleware 12 then accesses the passing information management application 22 and writes its PIN into the information storage section 23 (1) and supervises the state of the IC card 20 by way of polling (2). The terminal middleware 12 notifies the user notification unit 14 that the PIN age is still valid, and then the user notification unit displays the information (3).

The terminal middleware 12 sequentially acquires the current time and stores it as the latest time and checks whether a predetermined time (e.g., 30 seconds) has not elapsed. In case the predetermined time has elapsed or the acquired current time has shifted later than the stored latest time (time has been returned), or a time correction mode is entered, the terminal middleware 12 notifies the user notification unit 14 that the PIN age is exceed (4). The terminal middleware 12 accesses the passing information management application 22 of the passing information management application 22 of the cell phone 20 and erases the PIN written into the terminal middleware 12 (5). The user notification unit 14 displays the PIN age is not yet elapsed.

In case settlement processing is started between the IC card 20 and the external reader/writer 30 before the terminal middleware 12 erases the PIN stored in the information storage section 23, the external reader/writer 30 requests from the settlement card application of the IC card 20 a PIN (6) and the settlement card application accordingly accesses the passing information management application 22 to read the PIN information written by the terminal middleware 12 (7) and transmits the PIN information to the external reader/writer 30 (8). The passing information management application 22 erases the PIN from the information storage section 23 when the PIN is read a single time.

When the settlement processing between the IC card 20 and the external reader/writer 30 terminates, the terminal middleware 12 of the cell phone 10 which has detected the end of this processing accesses the passing information management application 22 to check that the PIN has been erased and stops checking the PIN age in case it is erased. In case the PIN is not erased, the terminal middleware 12 continues to check the PIN age. Once the PIN age has elapsed, the terminal middleware 12 accesses the passing information management application 22 to erase the PIN.

In this way, on the IC card 20, the entered PIN is erased without fail when or before a predetermine time has elapsed since its input. Even in case the cell phone which mounts the IC card has fallen within the hands of another malicious person, it is possible to prevent possible illegal settlement.

Even in case the PIN entered by the user is different from the PIN used by the settlement service of a settlement card application activated by the external reader/writer 30, the PIN is erased once it is read from the information storage section 23. This allows the user to retry PIN input once the settlement has proven unsuccessful. The user need not pay much attention to whether the Pin to be entered supports the target settlement service.

The settlement card application mounted on the IC card is a regular one so that the settlement card application no longer stores the PIN with malicious intention even in case the Pin acquired from the passing information management application 22 is not for the user.

By limiting settlement card applications which can reference the PINs in the information storage section 23 by using the following method for example, security of PIN is further enhanced.

The IC card is equipped with a function to externally present the information of pairs of service names and card application IDs. The terminal middleware of a cell phone uses this function to present the information of pairs of service names and card application IDs to the user and instructs the user to enter a PIN for which application. The terminal middleware specifies the settlement card application specified by the user as a sole settlement card application capable of referencing the PIN.

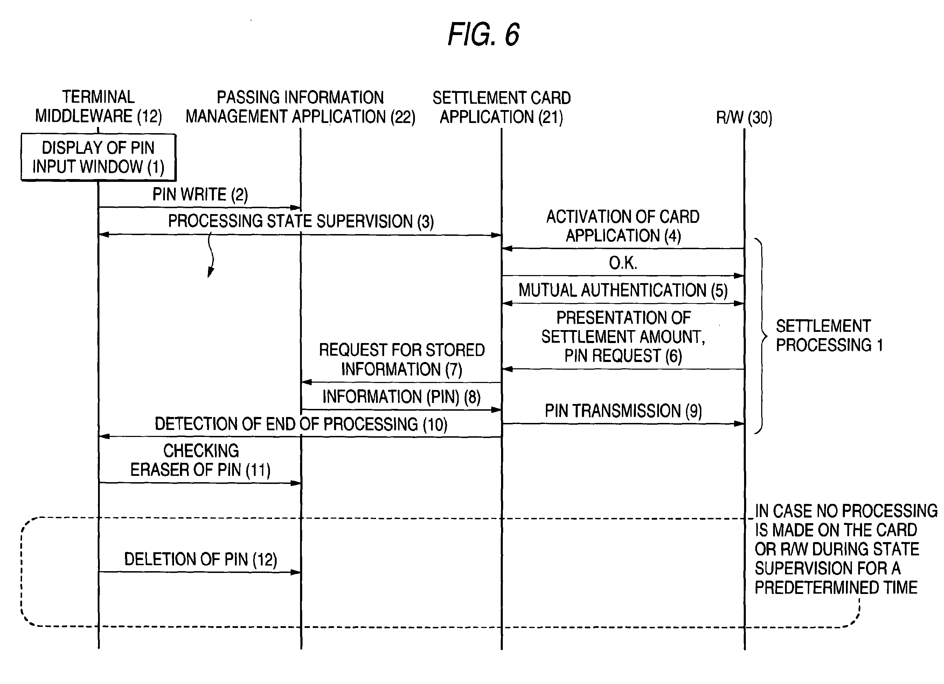

Fig. 6 shows the processing flow of the cell phone 10, IC card 20 and external reader/writer 30.

The terminal middleware 12 of the cell phone 10 displays a PIN input window on the display of the cell phone 10 (1). When the user enters a PIN, the terminal middleware 12 writes the PIN into the passing information management application 22 of the IC card 20 (2) and supervises the state of the IC card by way of polling (3). When the user places the cell phone 10 against the external reader/writer 30, the external readerlwriter 30 specifies the settlement card application and instructs its activation (4). Receiving an activation OK response from the settlement card application, the external reader/writer 30 performs mutual authentication with the settlement card application (5) and transmits settlement amount information and a PIN request to the settlement card application (6).

The settlement card application requests from the passing information management application 22 the PIN information retained in the information storage section 23 (7), acquires the PIN information written from the terminal middleware 12 (8), and transmits the PIN information to the external reader/writer 30 (9).

When the settlement processing terminates, the terminal middleware 12 detects the end of settlement processing (10) and access the passing information management application 22 to check that the written PIN is erased (11).

The terminal middleware 12, in the absence of the processing of the IC card 20 and the external reader/writer 30 during state supervision for a predetermined time accesses the passing information management application 22 and erases the written PIN (12).

The IC card 20 performs only passive operations of receiving a command and returning a response and conforms to corresponding international standards. Even in case a PIN is written, it is erased after a predetermined time, which prevents illegal settlement.

While prevention of illegal use of PIN for accepting settlement has been described, the invention may also be applied to prevention of illegal use of a P IN or a password for authentication in activating an application.

While the IC card is mounted on a cell phone in the foregoing example, the invention is not limited thereto. Instead of a cell phone, a variety of information processing apparatus can be used, such as a PDA (Personal Digital Assistant), an e-mail terminal, a compact personal computer and a game machine. The IC card may be of any form as long as it is a secure device capable of operating a card application in accordance with a command of APDU format. The shape of a secure device may be the shape of a card or a chip, or it may be embedded into information processing apparatus.

The secure device and information processing apparatus of the invention may be used in applications where the card functions of various cards including a settlement card which needs to prevent abuse by others, a traffic pass and a train ticket, a ticket to a play, a medical card, and a card issued by an administrative body are used.

### (Third embodiment)

The third embodiment of the invention describes a case where a secure device is an IC card having both functions of contact communications and contactless communications and information processing apparatus is a cell phone, and a PIN required for the IC card to perform settlement processing with a credit settlement terminal is input from the cell phone.

The IC card mounted on the cell phone exchanges information with the cell phone by way of contact communications. In case the cell phone is placed against an external reader/writer so that the IC card will enter the coverage of the external reader/writer, the IC card exchanges information with the external reader/writer by way of contactless communications.

The IC card comprises a dedicated card application (passing information intervening application) for passing/receiving information to/from the cell phone. Any card application stored in the IC card accesses the passing information intervening application to write or read information. On the cell phone, middleware is in charge of passing/receiving information to/from the passing information intervening application.

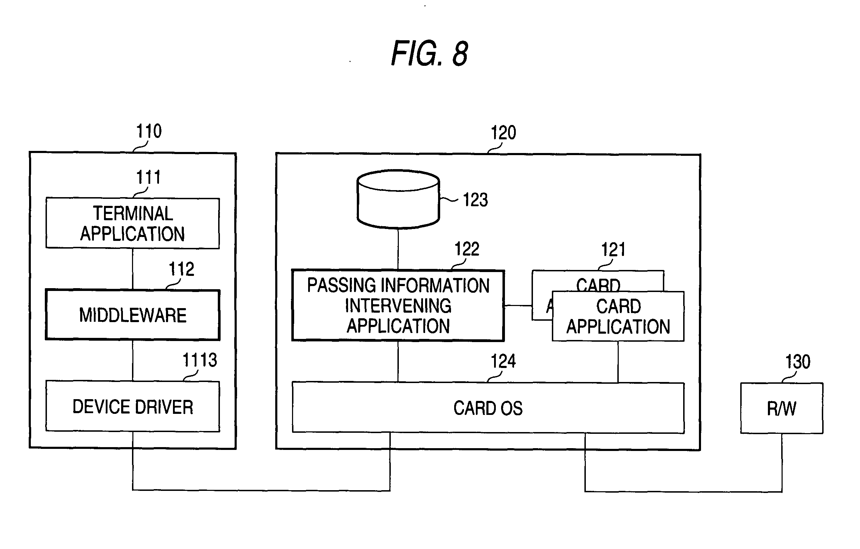

Fig. 8 schematically shows the configuration of the cell phone 110, an IC card 120 and an external reader/writer 130. The IC card 120 comprises a plurality of card applications for executing various services created by a service provided, a passing information intervening application 122 for centrally passing/receiving information to/from the cell phone 110, an information storage section 123 for temporarily storing the information to be passed, and a card OS 124 for executing communications and file management. The cell phone 110 includes a terminal application 111 for executing the operation in the cell phone coordinated with the processing of the card application 121, middleware 112 for performing information passing to the terminal application 111, and a device driver 113 for controlling the operation of the cell phone 110.

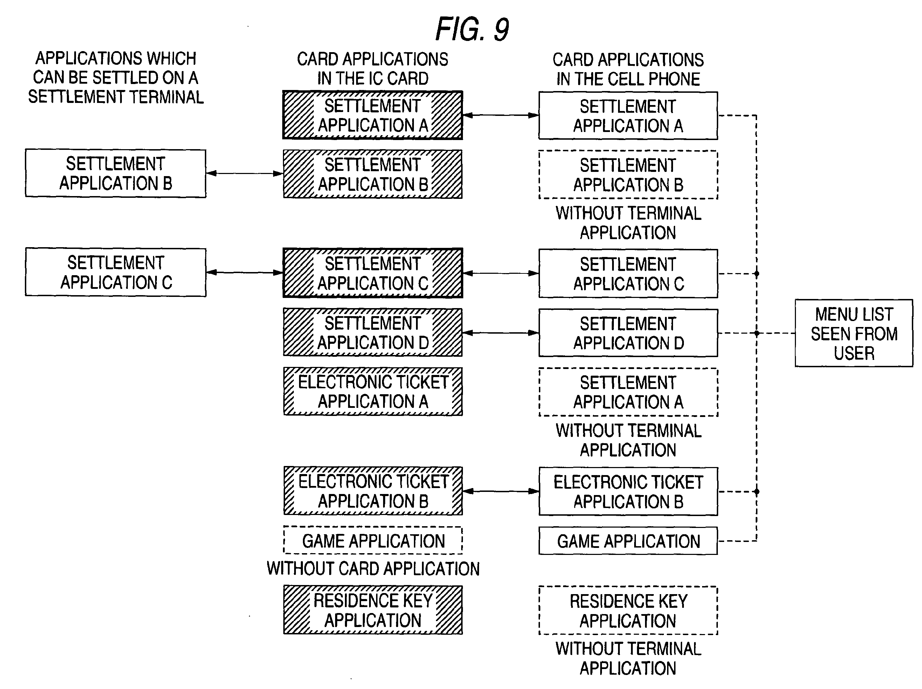

Fig. 9 illustrates the relationship between a terminal application 111 of the cell phone 110, a card application 121 of the IC card 120, and the settlement terminal application of the settlement terminal. The IC card 120 mounts, as card applications, a settlement application A, a settlement application B, a settlement application C, a settlement application D, an electronic ticket application A, an electronic ticket application B, and a residence key application. The settlement terminal comprises a settlement terminal application for performing a settlement service by using the settlement application B and the settlement application C. The cell phone 110 mounts a settlement application A, a settlement application B, a settlement application C, a settlement application D, an electronic ticket application B, and a game application terminal application 111. A list (menu) of terminal applications 111 in the cell phone 110 can be checked on the display screen of the cell phone 110. The user can activate e.g. the terminal application 111 of the settlement application A and read the remaining amount of the settlement service from the settlement application A of the IC card 120. As previously mentioned, the cell phone cannot request list information on the card applications 211 from the IC card 120.

Because a card application does not always have a corresponding terminal application (for example, a terminal application for a settlement application B does not exist but a card application for the settlement application B exists in an IC card), it is not possible to obtain the list information of card applications from a list of terminal applications shown on the display screen of the cell phone 110.

All card applications 121 of the IC card 120 can access the passing information intervening application 122 and write the information transmitted from the external reader/writer 130 to the card application 121 to the information storage section 123 of the passing information intervening application 122 as well as read the PIN written into the passing information intervening application 122 by the middleware 112 of the cell phone 110.

The passing information intervening application 122, for example in the case of a Java™ card where a card application is created in the Java™ language, can be implemented using the Sharable Interface. While a firewall is used to separate card applications so that a plurality of card applications can coexist in a safe fashion in an IC card, the Sharable Interface is an interface which can access a card application without being obstructed by a firewall.

The middleware 112 of the cell phone 110, once it has performed mutual authentication with the passing information intervening application 122, can access the passing information intervening application 122 without limitation.

The device driver 113 of the cell phone 110 keeps transmitting a polling signal to the IC card 120 in order to supervise the state of contactless communications of the IC card 120. The IC card 120 transmits a response "under communications" to the polling signal for processing state supervision in case contactless communications are in progress, or a response "not under communications" in case contactless communications are not in progress. This allows the device driver 113 to detect the end of contactless communications of the IC card 120.

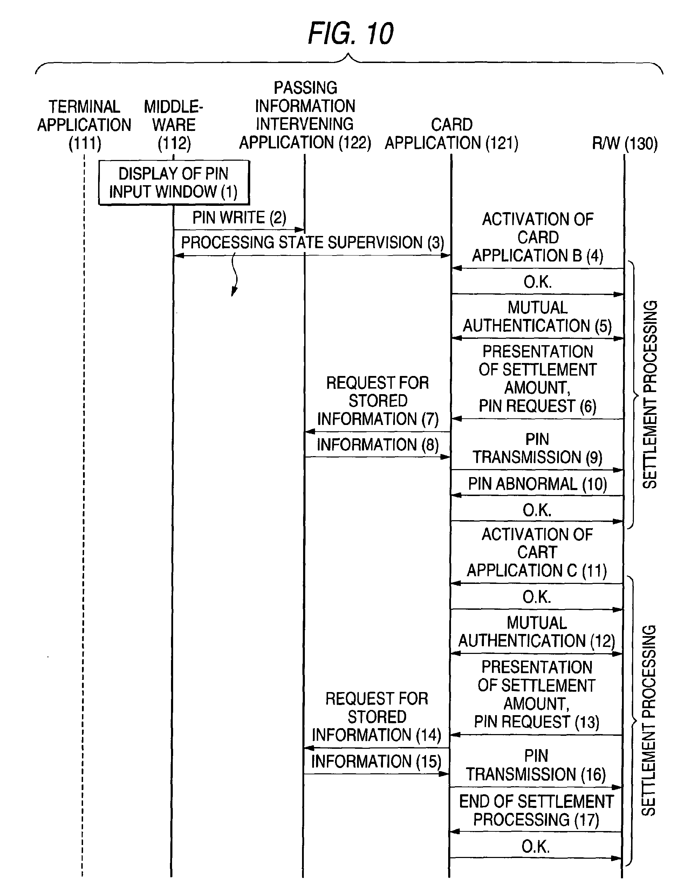

Fig. 10 shows the processing flow of a cell phone 110, an IC card 120 and an external reader/writer 130 of a settlement terminal.

On this apparatus, the user wishing to perform settlement processing enters a PIN from the cell phone 110. In this practice, the middleware 112 of the cell phone 110 displays a PIN input window on the display of the cell phone 110 (1). The user operates keys on the cell phone 110 to enter the PIN for the target settlement service. Assume that the user has entered the PIN for the settlement service C while wishing to enjoy the service of the settlement application C. The PIN input is to confirm the user's intention to select a service. The user has to perform no further operation for selecting a service.

The middleware 112 performs mutual authentication with the passing information intervening application 122 of the IC card 120 and writes the PIN entered by the user into the information storage section 123 via the passing information intervening application 122 (2) and, at the same time, the middleware 112 of the cell phone 110 starts to supervise the state of the IC card 120 (3).

The user places the cell phone 110 where the IC card 120 is mounted against the external reader/writer 130 of the settlement terminal. The IC card 120 which has entered the coverage of the external reader/writer 130 starts contactless communications.

The external reader/writer 130 specifies one of the card applications corresponding to the settlement services of the settlement terminal (settlement application B in this example) for the IC card 120 and instructs its activation (4). Receiving an activation OK response from the card application (settlement application B) 121, the external reader/writer 130 performs mutual authentication with the card application (settlement application B) 121 (5) and transmits the information on the settlement amount and a PIN request to be presented to the cell phone to the card application (settlement application B) 121 (6).

Receiving the PIN request, the card application (settlement application B) 121 accesses the passing information intervening application 122 and requests the information stored in the information storage section 23 (7). Acquiring the PIN written by the middleware 112 from the passing information intervening application 122 (8), the card application (settlement application B) 121 transmits the PIN to the external reader/writer 130 (9).

Matching of the PIN is made in a center connected to the external reader/writer 130. The PIN entered by the user is originally used for the settlement service of the settlement service C so that the matching fails and a PIN abnormality is reported from the external reader/writer 130 to the card application (settlement application B) 121 (10), and settlement processing with the card application (settlement application B) 121 terminates unsuccessfully.

Next, the external reader/writer 130 specifies the next card application (settlement C) corresponding to the settlement service of the settlement terminal for the IC card 120 and instructs its activation (11). Receiving an activation OK response from the card application (settlement application C) 121, the external reader/writer 130 performs mutual authentication with the card application (settlement application C) 121 (12) and transmits the information on the settlement amount and a PIN request to the card application (settlement application C) 121 (13).

Receiving the PIN request, the card application (settlement application C) 121 accesses the passing information intervening application 122 and requests the information stored in the information storage section 123 (14). Acquiring the PIN written by the middleware 112 (15), the card application (settlement application C) 121 transmits the PIN to the external reader/writer 130 (17).

Upon successful matching of PIN, the settlement processing is executed and a processing end notice is transmitted from the external reader/writer 130 to the card application (settlement application C) 121 (17). Thus the contactless communications between the IC card 120 and the external reader/writer 130 ends.

When the contactless communications of the IC cards 120 ends, the middleware 112 of the cell phone 110 which keeps state supervision of the IC card 120 detects the end of the contactless communications.

While the external reader/writer 130 specifies the settlement application B first as a card application to be activated in this example, the external reader/writer 130 may specify the settlement application C first. In this case, the settlement processing is successful when the settlement application C is specified and the contactless communications between the IC card 120 and the external reader/writer 130 ends. In this case, in the processing flow of Fig. 10, execution proceeds to the "activation of card application (11)" from the "processing state supervision (3)".

In case the settlement terminal has only a settlement terminal application corresponding to a single settlement application (e.g. settlement application C), the user has only to enter the PIN for the settlement application once. Then the external reader/writer 130 specifies the settlement application C to execute settlement processing, which will terminate successfully. In this case, in the processing flow of Fig. 10, the steps of "activation of card application (11)" ad the subsequent steps are followed after the "processing state supervision (3)".

In this way, on this apparatus, the PIN entered from the cell phone 110 is written into the passing information intervening application 122 of the IC card 120. Each card application 121 activated by the external reader/writer 130 sequentially read the PIN from the passing information intervening application 122 and transmits the PIN to the external reader/writer 130. The external reader/writer 130 sequentially updates the card application to be activated until the settlement processing succeeds by using the PIN transmitted from the card application.

In case the user knows that a target settlement service is included in the settlement services handled by the settlement terminal, the user has only to enter the PIN for the target settlement service once to enjoy the desired target service, without any workload of selecting a card application. This substantially enhances the user's convenience.

The IC card 120 performs only passive operations of receiving a command and returning a response and conforms to corresponding international standards.

### (Fourth embodiment)

The fourth embodiment of the invention describes apparatus which provides easy PIN input even in case the user has no knowledge on the settlement services handled by the settlement terminal.

The configuration of the cell phone and the IC card is the same as that in the third embodiment (Fig. 8).

The user places a cell phone 120 against an external reader/writer 130 before entering a PIN to start card communications between the IC card 120 and the external reader/writer 130. The external reader/writer 130 sequentially activates the card applications 121 corresponding to the settlement services of the settlement terminal to attempt settlement processing. In this practice, the external reader/writer 130 passes the information to identify the settlement service (such as a settlement terminal application name) to the card application 121. This information is written into the passing information intervening application 122. The settlement processing started by activating the card application 121 fails without exception, because a PIN is not entered. The information on the settlement services handled by the settlement terminal is gathered into the passing information intervening application 122.

The middleware 112 of the cell phone 120 reads this information fro the passing information intervening application 122 and displays the list information on the settlement services handled by the settlement terminal on the cell phone 110. The user references the displayed information and enters the PIN for the target settlement service.

Next, the user places the cell phone 110 against the external reader/writer 130 again to start card communications between the IC card 120 and the external reader/writer 130. Same as the previous round, the external reader/writer 130 sequentially activates the card applications 121 corresponding to the settlement services of the settlement terminal to attempt settlement processing. When the user activates the card application 121 for the target settlement service, PIN matching succeeds and settlement processing is complete.

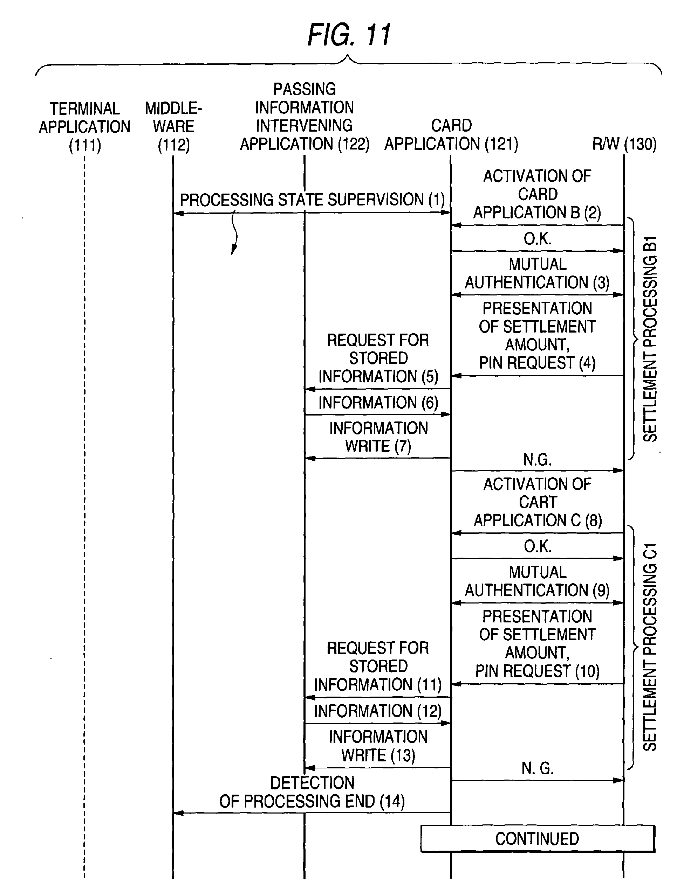

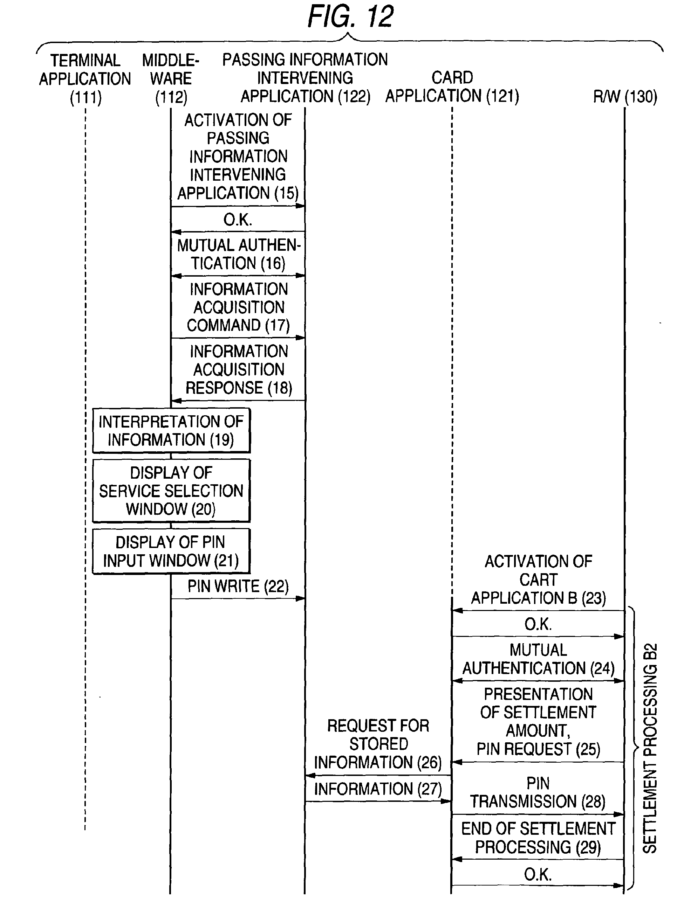

Figs. 11 and 12 show the processing flow of a cell phone 110, an IC card 120 and an external reader/writer 300 of a settlement terminal.

The user places a cell phone 110 on which an IC card 120 is mounted against an external reader/writer 300 of a settlement terminal. Middleware 112 of the cell phone 110 starts to supervise the state of the IC card 120 (1). The external reader/writer 130 specifies one of the card applications corresponding to the settlement services of the settlement terminal (settlement application B in this example) for the IC card 120 and instructs its activation (2). Receiving an activation OK response from the card application (settlement application B) 121, the external reader/writer 130 performs mutual authentication with the card application (settlement application B) 121 (3) and transmits the information on the settlement amount and a PIN request to be presented to the cell phone to the card application (settlement application B) 121 (4). In this practice, the external reader/writer 130 communicates a settlement terminal application ID and a display application name for the user to the card application (settlement application B) 121.

Receiving the PIN request, the card application (settlement application B) 121 accesses the passing information intervening application 122 and requests the information stored in the information storage section 123 (5). The information acquired from the passing information intervening application 122 does not include a PIN (6) so that the card application (settlement application B) 121 writes into the information storage section 123 the settlement amount information, a settlement terminal application ID and a display application name for the user received from the external reader/writer 130 via the passing information intervening application 122 (7), and returns an NG response to the external reader/writer 130.

The external reader/writer 130 which has received an NG response specifies a card application (settlement application C) corresponding to another settlement service of the settlement terminal and instructs its activation (8). Receiving an activation OK response from the card application (settlement application C) 121, the external reader/writer 130 performs mutual authentication with the card application (settlement application C) 121 (9) and transmits the settlement amount information, a settlement terminal application ID and a display application name for the user to the card application (settlement application C) 121 (10).

The card application (settlement application C) 121 accesses the terminal middleware 12 and requests the PIN information stored in the information storage section 123 (11). The information acquired from the passing information intervening application 122 does not include a PIN (12) so that the card application (settlement application C) 121 writes into the information storage section 123 the settlement amount information, a settlement terminal application ID and a display application name for the user received from the external reader/writer 130 via the passing information intervening application 122 (13), and returns an NG response to the external reader/writer 130.

In this way, the external reader/writer 130 sequentially specifies the card applications 121 corresponding to the settlement services of the settlement terminal to attempt settlement processing. When all of the processing attempts fail, the external reader/writer 130 ends contactless communications with the IC card 120.

The middleware 112 of the cell phone 110 which has kept supervising the state of the IC card 120 by way of the device driver 113 detects the end of contactless communications of the IC card 120 (14) and instructs activation of the passing information intervening application 122 of the IC card 120 (15). Receiving an activation OK response from the passing information intervening application 122, the middleware 112 performs mutual authentication with the passing information intervening application 122 (16), and transmits an information acquisition command to the passing information intervening application 122 (17). Receiving the command, the passing information intervening application 122 returns to the middleware 112 a response whose response data includes the information retained in the information storage section 123 (a settlement terminal application ID of a settlement service handled by the settlement terminal, and information on the settlement amount) (18). The middleware 112 interprets the acquired information (19) and displays a service selection window listing the settlement amount and display application names of settlement services for the user handled by the settlement terminal (20), and then a PIN input window for input of PIN (21). The user references the service selection window and enters a PIN used for a target settlement service (settlement service corresponding to the settlement application B in this example) from the PIN input window. The middleware accesses the middleware 112 to write the PIN into the information storage section 123 (22).

The user places the cell phone 110 on which the IC card 120 is mounted against the external reader/writer 300 of the settlement terminal once again. The external reader/writer 130 specifies one of the card applications corresponding to the settlement services of the settlement terminal (settlement application B in this example) for the IC card 120 and instructs its activation (23). Receiving an activation OK response from the card application (settlement application B) 121, the external reader/writer 130 performs mutual authentication with the card application (settlement application B) 121 (24) and transmits the information on the settlement amount, a settlement terminal application ID, a display application name for the user, and a PIN request to the card application (settlement application B) 121 (25).

The card application (settlement application B) 121 accesses the passing information intervening application 122 and request the PIN information stored in the information storage section 123.

Upon successful PIN matching, settlement processing is executed on the settlement terminal and a processing end notice is transmitted from the external reader/writer 130 to the card application (settlement application B) 121 (2)) to terminate the settlement processing.

In this way, on this apparatus, information on all settlement services handled by the settlement terminal is recorded in the passing information intervening application 122 of the IC card 120. This information read into the cell phone 110 and listed on the display of the cell phone 110. Thus, the user knows available settlement services from the display and enters the PIN for a target settlement service in the list to enjoy the service, without any workload of selecting a card application.

The user may select one of the available settlement services listed on the display of the cell phone 110 and enter the PIN for the selected service from the PIN input window.

In the above case, the user has to select a settlement service as an additional step, this step is effective when a single PIN is set for a plurality of settlement services. A series of operations of presenting a service list on the display of the cell phone 110 and writing the information on the specified service and entered PIN into the information storage section 123 of the passing information intervening application 122 may be executed by the middleware 112 as well as the terminal application 111 of the cell phone 110. Note that the service list information and the PIN input screen need not be displayed at the same time.

The IC card 20 performs only passive operations of receiving a command and returning a response and conforms to corresponding international standards.

While the external reader/writer 130 communicates a settlement terminal application ID and a display application name for the user to the activated card application 121 and the card application 121 writes the information into the passing information intervening application 122 in the above example, the card application 121 may previously retain the information on the settlement terminal application ID and the display application name for the user and write the information into the passing information intervening application 122 as instructed by the external reader/writer 130.

While the IC card is mounted on a cell phone in the foregoing example, the invention is not limited thereto. Instead of a cell phone, a variety of information processing apparatus can be used, such as a PDA (Personal Digital Assistant), an e-mail terminal, a compact personal computer and a game machine. The IC card may be of any form as long as it is a secure device capable of operating a card application in accordance with a command of APDU format. The shape of a secure device may be the shape of a card or a chip, or it may be embedded into information processing apparatus.

While input of a PIN to accept settlement processing has been described in the foregoing embodiments, the invention is also applicable to input of personal identification information such as a PIN or a password required for authentication in activating an application

The secure device, information processing apparatus and terminal apparatus of the invention may be used in applications where the card functions of various cards including a settlement card, a traffic pass and a train ticket, a ticket to a play, a medical card, and a card issued by an administrative body are used. The invention thus eliminates the cumbersome operation to accompany the input of a PIN or a password necessary to execute a card function.

## Claims

1. A secure device comprising:
first communications unit;
second communications unit; and
one or more card function unit;
passing information management unit, accessible to all card function unit;
wherein the passing information management unit retains the processing identifier transmitted from an external reader/writer via the first communications unit and the data transmitted from the information processing apparatus via the second communications unit in association with each other; and
the card function unit, receiving a processing identifier and a data request from an external reader/writer via the first communications unit, reads the data where the corresponding processing identifier matches the received processing identifier from the passing information management unit and transmits the data to the external reader/writer.

2. The secure device according to claim 1,
wherein the passing information management unit selects data corresponding to the processing identifier matching the processing identifier received by the card function unit from the retained data; and
the card unit acquires the selected data.

3. The secure device according to claim 1, wherein the processing identifier transmitted from the external reader/writer is updated in terms of time.

4. The secure device according to claim 1, wherein, when the card function unit has failed to transmit data to an external reader/writer without acquiring data from the passing information management unit, the same processing identifier as the previous pp information s retransmitted from the external reader/writer to the card function unit in the next round of communications by the first communications unit carried out within a predetermined time.

5. A secure device comprising:
first communications unit;
second communications unit; and
one or more card function unit;
passing information management unit, accessible to all card function unit;
wherein the card function unit, receiving a data request from an external reader/writer via the first communications unit, reads the data transmitted from information processing apparatus which is retained in the passing information management unit and transmits the data to the external reader/writer, and that, when the data is not read within a predetermined time, the passing information management unit erases the data based on an instruction transmitted from the information processing apparatus via the second communications unit.

6. The secure device according to claim 1 or 5,
wherein the first communications unit performs contactless communications and the second communications unit performs contact communications.

7. An Information processing apparatus holding the secure device according to claim 1, comprising:
state supervision unit, supervising the end of communications by way of the first communications unit of the secure device; and
middleware which, once the state supervision unit has detected the end of the communications, accesses the passing information management unit of the secure device via the second communications unit of the secure device and acquires a processing identifier and a data request retained in the passing information management unit;
wherein the middleware transmits the data entered in response to the data request and the processing identifier to the passing information management unit.

8. An Information processing apparatus holding the secure device according to claim 5, comprising:
state supervision unit, supervising the end of communications by way of the first communications unit of the secure device; and
middleware, writing the entered data to the passing information management unit of the secure device via the second communications unit of the secure device, and
wherein, when communications processing by way of the first communications unit of the secure device is not performed within a predetermined time, the middleware erases the data written into the passing information management unit.

9. The information processing apparatus according to claim 7 or 8, wherein the secure device is attached to the information processing apparatus in a detachable fashion.

10. The information processing apparatus according to claim 7 or 8, wherein the secure device is integrally embedded into the information processing apparatus.

11. A secure device comprising:
first communications unit;
second communications unit; and
one or more card function unit; and
passing information intervening unit, accessible to all card function unit;
wherein the card function unit, receiving a request for personal identification information required to provide a service from an external reader/writer via the first communications unit, reads the personal identification information retained in the passing information intervening unit and transmits the information to the external reader/writer; and
the passing information intervening unit retains the personal identification information written from the information processing apparatus via the second communications unit before the card function beans communicates with the external reader/writer via the first communications unit.

12. A secure device comprising:
first communications unit;
second communications unit;
one or more card function unit;
passing information intervening unit, accessible to all card function unit;
wherein the card function unit, receiving specific information on a service and a request for personal identification information required to provide the service from an external reader/writer via the first communications unit, reads the personal identification information and transmits the information to the external reader/writer in case the personal identification information is retained in the passing information intervening unit, or writes the specific information on the service into the passing information intervening unit in case the personal identification information is not retained in the passing information intervening unit; and
the passing information intervening unit provides the information processing apparatus of the specific information on the service via the second communications unit and retains the personal identification information written from the information processing apparatus.

13. The secure device according to claim 11 or 12, wherein:
the first communications unit performs contactless communications and that the second communications unit performs contact communications.

14. An Information processing apparatus holding the secure device according to claim 11, comprising:
state supervision unit, supervising the end of communications by way of the first communications unit of the secure device; and
middleware, displaying a screen for entering personal identification information and writing the entered personal identification information to the passing information intervening unit of the secure device via the second communication unit of the secure device.

15. An Information processing apparatus holding the secure device according to claim 12, comprising:
state supervision unit, supervising the end of communications by way of the first communications unit of the secure device and
middleware which, once the state supervision unit has detected the end of the communications, accesses the passing information intervening unit of the secure device via the second communications unit of the secure device and acquires specific information on a service retained in the passing information intervening unit, and
the middleware displays list information on a service based on the acquired information as well as displays a screen for entering personal identification information required to provide the service and writes the entered personal identification information into the passing information intervening unit.

16. The information processing apparatus according to claim 15, wherein the information processing apparatus displays service list information based on the acquired information and prompts input of service specification information and personal identification information required to provide the service, and writes the entered service specification information and personal identification information into the passing information intervening unit.

17. The information processing apparatus according to claim 14 or 15, wherein the secure device is attached to the information processing apparatus in a detachable fashion.

18. The information processing apparatus according to claim 14 or 15, wherein the secure device is integrally embedded into the information processing apparatus.

19. A terminal apparatus for communicating with a secure device equipped with a plurality of card function unit and executing a service selected from among a plurality of available services;
wherein the terminal apparatus activates card function unit corresponding to a selected service and requests personal identification information required to provide a service, and in case the personal identification information transmitted from the card function unit is abnormal, selects another service, and activates the card function unit corresponding to the service and requests personal identification information required to provide the service.
